(19) **Europäisches Patentamt / European Patent Office / Office européen des brevets**

(11) **EP 4 625 981 A1**

(12) **EUROPEAN PATENT APPLICATION**

(43) Date of publication:
01.10.2025 Bulletin 2025/40

(51) International Patent Classification (IPC):
H04N 19/117 (2014.01)   H04N 19/172 (2014.01)
H04N 19/70 (2014.01)

(21) Application number: 24305445.9

(22) Date of filing: 25.03.2024

(52) Cooperative Patent Classification (CPC):
H04N 19/117; H04N 19/172; H04N 19/70

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• FRANCOIS, Edouard
  35890 BOURG DES COMPTES (FR)
• DOYEN, Didier
  35510 CESSON-SEVIGNE (FR)
• URBAN, Fabrice
  35235 THORIGNE-FOUILLARD (FR)
• DE LAGRANGE, Philippe
  35830 BETTON (FR)

(74) Representative: Interdigital
Immeuble ZEN 2
845 A, avenue des Champs Blancs
35510 Cesson-Sévigné (FR)

(54) **METHOD AND APPARATUS FOR ENCODING/DECODING**

(57) In various implementations, method and devices are disclosed that allow generating more than one instances of extrapolated pictures of a decoded picture by applying a plurality of neural-network post-filters to the decoded picture. Various embodiments of coded video data, one or more syntax structure NNPFC for temporal extrapolation neural-network post-filtering and one or more syntax structure for neural-network post-filter activation NNPFA associated with the one or more NNPFC and their processing generating more than one instances of extrapolated pictures of a decoded picture are disclosed.

FIG. 6

**Description**

TECHNICAL FIELD

The present embodiments generally relate to a method and an apparatus for generating more than one instances of extrapolated pictures of a decoded picture by applying a plurality of neural-network post-filters to the decoded picture.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

SUMMARY

In various implementations, methods and devices are disclosed that provide a syntax structure adapted to generate more than one instances of extrapolated pictures per time stamp or picture number or picture order count of a decoded picture of a video by applying a plurality of neural-network post-filters.

According to a first aspect, a method of video encoding is disclosed that comprises encoding and decoding at least one picture of a video; deriving a plurality of neural-network post-filter NNPF models for temporal extrapolation such that more than one instances of extrapolated pictures of a decoded picture of the video are generated by applying the plurality of NNPF models to the decoded picture; encoding more than one syntax structure for temporal extrapolation neural-network post-filter (NNPFC) associated with the plurality of NNPF models; and encoding more than one syntax structure for neural-network post-filter activation NNPFA associated with the more than one NNPFC.

According to a second aspect, a method of video decoding is disclosed that comprises decoding at least one picture of a video; obtaining more than one syntax structure for temporal extrapolation neural-network post-filter (NNPFC); decoding a plurality of neural-network post-filter NNPF models from the more than one NNPFC; obtaining more than one syntax structure for neural-network post-filter activation (NNPFA) associated with the more than one NNPFC; identifying a plurality of activated NNPF models; and generating more than one instances of extrapolated pictures of a decoded picture of the video by applying the plurality of activated NNPF models to the decoded picture.

According to a third aspect, a method of video encoding is disclosed that comprises encoding and decoding at least one picture of a video; deriving a plurality of neural-network post-filter NNPF models for temporal extrapolation such that more than one instances of extrapolated pictures of a decoded picture of the video are generated by applying the plurality of NNPF models to the decoded picture; encoding one syntax structure for temporal extrapolation neural-network post-filter (NNPFC) associated with the plurality of NNPF models enabling a plurality of instances of the neural-network post-filter; and encoding more than one syntax structure for neural-network post-filter activation (NNPFA) associated with the NNPFC.

According to a fourth aspect, a method of video decoding is disclosed that comprises decoding at least one picture of a video; obtaining one syntax structure for temporal extrapolation neural-network post-filter (NNPFC) associated with a plurality of NNPF models enabling a plurality of instances of the neural-network post-filter; decoding the plurality of neural-network post-filter NNPF models from the NNPFC; obtaining more than one syntax structure for neural-network post-filter activation (NNPFA) associated with the NNPFC; identifying a plurality of activated NNPF models; and generating more than one instances of extrapolated pictures of a decoded picture of the video by applying the plurality of activated NNPF models to the decoded picture.

According to a fifth aspect, a method of video encoding is disclosed that comprises encoding and decoding at least one picture of a video; deriving a neural-network post-filter NNPF model for temporal extrapolation such that more than one instances of extrapolated pictures of a decoded picture of the video are generated by applying the NNPF model to the decoded picture and to a plurality of control parameters sets; deriving a plurality of control parameters sets enabling generating a plurality of instances of extrapolated pictures of a decoded picture from the neural-network post-filter; encoding one syntax structure for temporal extrapolation neural-network post-filter (NNPFC) associated with the NNPF model; signaling a plurality of control parameters sets for generating a plurality of instances of extrapolated pictures of a decoded picture from the neural-network post-filter; and encoding one or more syntax structure for neural-network post-filter activation (NNPFA) associated with the NNPFC.

According to a sixth aspect, a method of video decoding is disclosed that comprises decoding at least one picture of a video; obtaining one syntax structure for temporal extrapolation neural-network post-filter (NNPFC) associated with a NNPF model such that more than one instances of extrapolated pictures of a decoded picture of the video are generated by applying the NNPF model to the decoded picture and to a plurality of control parameters sets; obtaining a plurality of control parameters sets enabling generating a plurality of instances of extrapolated pictures of a decoded picture from the neural-network post-filter; decoding the neural-network post-filter NNPF model from the NNPFC; obtaining one or more syntax structure for neural-network post-filter activation (NNPFA) associated with the NNPFC; identifying a plurality of control parameters sets; and generating more than one instances of extrapolated pictures of a decoded picture of the video by applying the NNPF model to the decoded picture, the NNPF model further using as input each one of the activated control parameters set.

One or more embodiments also provide method and/or apparatus for signaling the different variants of the one or more syntax structures for temporal extrapolation neural-network post-filter according to any of the embodiments described herein.

One or more embodiments also provide an apparatus for encoding/decoding video comprising one or more processors and at least one memory coupled to said one or more processors, wherein said one or more processors are configured to perform the encoding method according to any of the embodiments described herein.

One or more embodiments also provide a computer program comprising instructions which when executed by one or more processors cause the one or more processors to perform the encoding method according to any of the embodiments described herein. One or more of the present embodiments also provide a computer readable storage medium having stored thereon instructions for encoding or decoding a video according to the methods described herein.

One or more embodiments also provide a computer readable storage medium having stored thereon video data generated according to the methods described above. One or more embodiments also provide a method and apparatus for transmitting or receiving the video data generated according to the methods described herein.

BRIEF DESCRIPTION OF THE DRAWINGS

FIG. 1 illustrates a block diagram of a system within which aspects of the present embodiments may be implemented.
FIG. 2 illustrates a block diagram of an embodiment of a video encoder.
FIG. 3 illustrates a block diagram of an embodiment of a video decoder.
FIG. 4 illustrates an example of usage of the NNPF process according to prior art.
FIG. 5 illustrates another example of usage of the NNPF process according to prior art.
FIG. 6 illustrates an example of usage of the NNPF process according to a first embodiment.
FIG. 7 illustrates an example of usage of the NNPF process according to a second embodiment.
FIG. 8 illustrates an example of usage of the NNPF process according to a variant of the second embodiment.
FIG. 9 illustrates a method for decoding a video according to an embodiment.
FIG. 10 illustrates a method for encoding a video according to an embodiment.
FIG. 11 illustrates a method for decoding a video according to an embodiment.
FIG. 12 illustrates a method for encoding a video according to an embodiment.

DETAILED DESCRIPTION

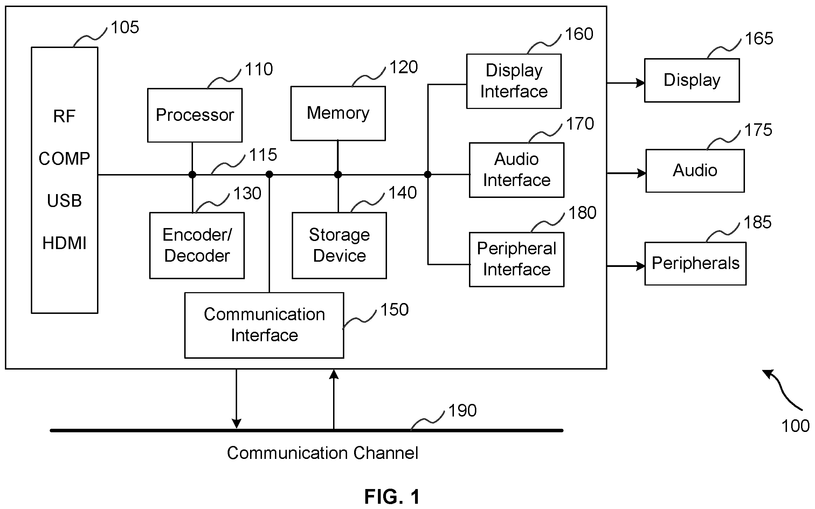

FIG. 1 illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple Ics and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC.

The input to the elements of system 100 may be provided through various input devices as indicated in block 105. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface Ics or within processor 110 as necessary. The demodulated, error corrected, and demultiplexed stream is provided to various processing elements, including, for example, processor 110, and encoder/-decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802. 11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

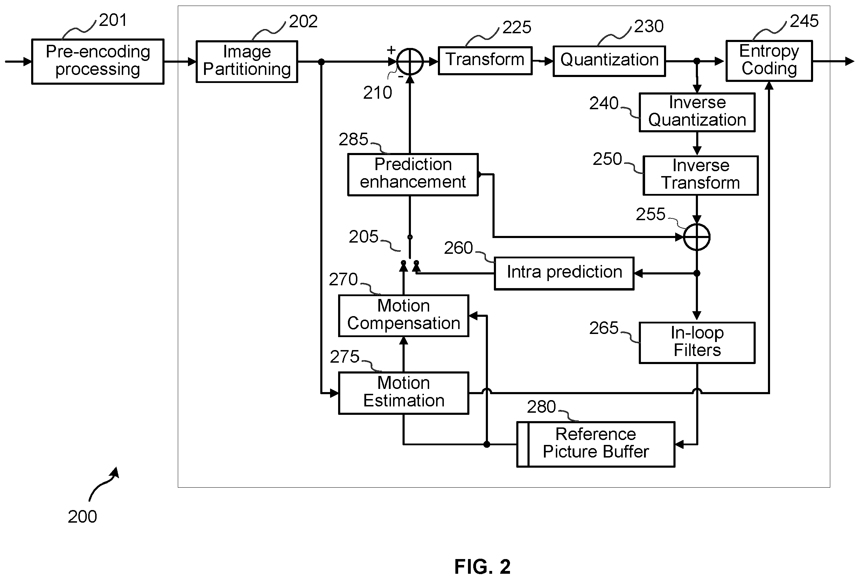

FIG. 2 illustrates an example video encoder 200, such as a VVC (Versatile Video Coding) encoder. FIG. 2 may also illustrate an encoder in which improvements are made to the VVC standard or an encoder employing technologies similar to VVC.

In the present application, the terms "reconstructed" and "decoded" may be used interchangeably, the terms "encoded" or "coded" may be used interchangeably, and the terms "image," "picture" and "frame" may be used interchangeably. Usually, but not necessarily, the term "reconstructed" is used at the encoder side while "decoded" is used at the decoder side.

Before being encoded, the video sequence may go through pre-encoding processing (201), for example, applying a color transform to the input color picture (e.g., conversion from RGB 4:4:4 to YcbCr 4:2:0), or performing a remapping of the input picture components in order to get a signal distribution more resilient to compression. Metadata can be associated with the pre-processing, and attached to the bitstream (for example in the form of supplemental enhancement information (SEI) messages, for AVC, HEVC, and VVC standards).

In the encoder 200, a picture is encoded by the encoder elements as described below. The picture to be encoded is partitioned (202) and processed in units of, for example, Cus. Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. After prediction, prediction enhancement (285) is applied to the prediction block. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

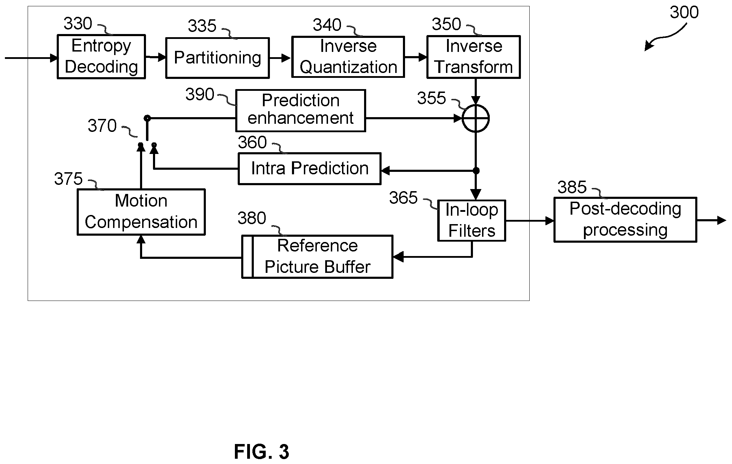

FIG. 3 illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block can be obtained (370) from intra prediction (360) or motion-compensated prediction (i.e., inter prediction) (375). After prediction, prediction enhancement (390) is applied to the prediction block. In-loop filters (365) are applied to the reconstructed image. The filtered image is stored at a reference picture buffer (380).

The decoded picture can further go through post-decoding processing (385), for example, an inverse color transform (e.g., conversion from YcbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream. As described hereafter, the post-decoding processing can include post-processing filtering for temporal extrapolation.

Recent additions to video compression technology include various industry standards, versions of the reference software and/or documentations such as Enhanced Compression Model (ECM) being developed by the JVET (Joint Video Exploration Team) group. The aim is to make further improvements to the existing VVC (Versatile Video Coding) standard and VSEI specification.

Recent improvement to video compression technology includes a Neural-Network Post-Filter NNPF designed for various post-processing filtering purpose such as general visual quality improvement, chroma upsampling, resolution resampling, picture rate upsampling. Yet, a recent addition to post-processing filtering comprises temporal extrapolation Neural-Network NN, which is also known as a video prediction NN and, which generates one or more pictures in the future given one or more past pictures as input. For instance, typical use cases for temporal extrapolation include very low delay computer vision for domains like robotics and autonomous driving, where extrapolated future pictures facilitate anticipatory decision making; or an increase of the rendered picture rate in very low-latency applications, such as cloud gaming, relative to the decoded picture rate. Various implementation of the Neural-Network Post-Filter NNPF are realized by the means of a parameterized NN model.

## NNPFC SEI

A neural-network post-filter (NNPF) characteristics SEI message is defined in an amendment of the VSEI specification. It allows conveying information related to an NN model (as external or internal parameters, depending on syntax element **nnpfc_mode_idc)**, plus information related to the purpose of the NN model (the "**nnpfc_purpose**" syntax element). This information is used to indicate the purposes that the signaled NNPF is intended to.

In a first prior art approach, a NNPFC SEI syntax is defined as provided in the following table.

| Nn_post_filter_characteristics( payloadSize ) { | Descript or |
|---|---|
| **nnpfc_purpose** | u(16) |
| **nnpfc_id** | ue(v) |
| **nnpfc_base_flag** | u(1) |
| **nnpfc_mode_idc** | ue(v) |
| if( nnpfc_mode_idc = = 1 ) { | |
| while( !byte_aligned( ) ) | |
| **nnpfc_alignment_zero_bit_a** | u(1) |
| **nnpfc_tag_uri** | st(v) |
| **nnpfc_uri** | st(v) |
| } | |
| **nnpfc_property_present_flag** | u(1) |
| if( nnpfc_property_present_flag ) { | |
| /* input and output formatting */ | |
| **nnpfc_num_input_pics_minus1** | ue(v) |
| if( nnpfc_num_input_pics_minus1 > 0 ) { | |
| for( I = 0; i <= nnpfc_num_input_pics_minus1; i++ ) | |
| **nnpfc_input_pic_filtering_flag**[ i ] | u(1) |

(continued)

| | |
|---|---|
| **nnpfc_absent_input_pic_zero_flag** | u(1) |
| } | |
| if( ChromaUpsamplingFlag ) | |
| **nnpfc_out_sub_c_flag** | u(1) |
| if( ColourizationFlag ) | |
| **nnpfc_out_colour_format_idc** | u(2) |
| if( ResolutionResamplingFlag ) { | |
| **nnpfc_pic_width_num_minus1** | ue(v) |
| **nnpfc_pic_width_denom_minus1** | ue(v) |
| **nnpfc_pic_height_num_minus1** | ue(v) |
| **nnpfc_pic_height_denom_minus1** | ue(v) |
| } | |
| if( PictureRateUpsamplingFlag ) | |
| for( i = 0; i < nnpfc_num_input_pics_minus1; i++ ) | |
| **nnpfc_interpolated_pics[ i ]** | ue(v) |
| **nnpfc_component_last_flag** | u(1) |
| **nnpfc_inp_format_idc** | ue(v) |
| **nnpfc_auxiliary_inp_idc** | ue(v) |
| **nnpfc_inp_order_idc** | ue(v) |
| if( nnpfc_inp_format_idc = = 1 ) { | |
| if( nnpfc_inp_order_idc != 1 ) | |
| **nnpfc_inp_tensor_luma_bitdepth_minus8** | ue(v) |
| if( nnpfc_inp_order_idc > 0 ) | |
| **nnpfc_inp_tensor_chroma_bitdepth_minus8** | ue(v) |
| } | |
| **nnpfc_out_format_idc** | ue(v) |
| **nnpfc_out_order_idc** | ue(v) |
| if( nnpfc_out_format_idc = = 1 ) { | |
| if( nnpfc_out_order_idc != 1 ) | |
| **nnpfc_out_tensor_luma_bitdepth_minus8** | ue(v) |
| if( nnpfc_out_order_idc != 0 ) | |
| **nnpfc_out_tensor_chroma_bitdepth_minus8** | ue(v) |
| } | |
| **nnpfc_separate_colour_description_present_flag** | u(1) |
| if( nnpfc_separate_co!our_description_present_flag ) { | |
| **nnpfc_colour_primaries** | u(8) |
| **nnpfc_transfer_characteristics** | u(8) |
| if( nnpfc_out_format_idc = = 1 ) { | |
| **nnpfc_matrix_coeffs** | u(8) |
| **nnpfc_full_range_flag** | u(1) |

(continued)

| | |
|---|---|
| } | |
| } | |
| if( nnpfc_out_order_idc > 0 ) | |
| **nnpfc_chroma_loc_info_present_flag** | u(1) |
| if( nnpfc_chroma_loc_info_present_flag ) | |
| **nnpfc_chroma_sample_loc_type_frame** | ue(v) |
| **nnpfc_overlap** | ue(v) |
| **nnpfc_constant_patch_size_flag** | u(1) |
| if( nnpfc_constant_patch_size_flag ) { | |
| **nnfc_patch_width_minus1**u | v) |
| **_patch_height_minus1**u( | |
| | |
| **nded_patch_width_cd_delta_minus1**u(v | |
| **ch_height_cd_delta_minus1**u(v) | |
| | |
| **nnpfc_padding_type** | ue(v) |
| if( nnpfc_padding type = = 4 ) { | |
| if( nnpfc_inp_order_idc != 1 ) | |
| **nnpfc_luma_padding_val** | ue(v) |
| if( nnpfc_inp_order_idc != 0 ) { | |
| **nnpfc_cb_padding_val** | ue(v) |
| **nnpfc_cr_padding_val** | ue(v) |
| } | |
| } | |
| **nnpfc_complexity_info_present_flag** | u(1) |
| if( nnpfc_complexity_info_present_flag ) { | |
| **nnpfc_parameter_type_idc** | u(2) |
| if( nnpfc_parameter_type_idc != 2 ) | |
| **nnpfc_log2_parameter_bit_length_minus3** | u(2) |
| **nnpfc_num_parameters_idc** | u(6) |
| **nnpfc_num_kmac_operations_idc** | ue(v) |
| **nnpfc_total_kilobyte_size** | ue(v) |
| } | |
| **nnpfc_num_metadata_extension_bits** | ue(v) |
| if( nnpfc_num_metadata_extension_bits > 0 ) | |
| **nnpfc_reserved_metadata_extension** | u(v) |
| } | |
| /* ISO/IEC 15938-17 bitstream */ | |
| if( nnpfc_mode_idc = = 0 ) { | |
| while( !byte_aligned( ) ) | |

(continued)

| | |
|---|---|
| **nnpfc_alignment_zero_bit_b** | u(1) |
| for( i = 0; more_data_in_payload( ); i++ ) | |
| **nnpfc_payload_byte**[ i ] | b(8) |
| } | |
| } | |

In a refinement to this first prior art approach, the NNPFC SEI syntax was then extended to address the signaling of information related to a temporal extrapolation Neural-Network NN. Excerpt of syntax and semantics related to the nnpfc_purpose is indicated below, where a new purpose, temporal extrapolation of frames, has been added. Added syntax is highlighted in bold italic and underlined in the table below.

| nn_post_filter_characteristics( payloadSize ) { | **Descript or** |
|---|---|
| ... | |
| if( PictureRateUpsamplingFlag ) | |
| for( i = 0; i < nnpfc_num_input_pics_minus1; i++ ) | |
| **nnpfc_interpolated_pics**[ i ] | **ue(v)** |
| *if( TemporalExtrapolationFlag )* | |
| *nnpfc_extrapolated_pics_minus1* | *ue(v)* |
| ... | |
| if( nnpfc_complexity_info_present_flag ) { | |
| **nnpfc_parameter_type_idc** | u(2) |
| if( nnpfc_parameter_type_idc != 2 ) | |
| **nnpfc_log2_parameter_bit_length_minus3** | u(2) |
| **nnpfc_num_parameters_idc** | u(6) |
| **nnpfc_num_kmac_operations_idc** | ue(v) |
| **nnpfc_total_kilobyte_size** | ue(v) |
| } | |
| **nnpfc_metadata_extension_num_bits** | ue(v) |
| if( nnpfc_metadata_extension_num_bits > 0 ) { | |
| *if( nnpfc_purpose = = 0) {* | |
| *nnpfc_application_purpose_tag_uri_present_flag* | *u(1)* |
| *if( nnpfc_application_purpose_tag_uri_present_flag )* | |
| *nnpfc_application_purpose_tag_uri* | *st(v)* |
| *}* | |
| **nnpfc_reserved_metadata_extension** /*Remaining bits of the metadata extension*/ | u(v) |
| } | |
| } | |
| ... | |
| } | |

The semantics of the "nnpfc_purpose" syntax element is defined as follow: **nnpfc_purpose** indicates the purpose of the NNPF as specified in Table 20, where ( nnpfc_purpose & bitMask) not equal to 0 indicates that the NNPF has the purpose associated with the bitMask value in Table 20. When nnpfc_purpose is greater than 0 and ( nnpfc_purpose & bitMask ) is equal to 0, the purpose associated with the bitMask value is not applicable to the NNPF. When nnpfc_pupose is equal to 0, the NNPF may be used as determined by the application and as specified by the nnpfc_application_purpose_tag_uri. The value of nnpfc_purpose shall be in the range of 0 to 63, inclusive, in bitstreams conforming to this edition of this document. Values of 64 to 65 535, inclusive, for nnpfc_purpose are reserved for future use by ITU-T | ISO/IEC and shall not be present in bitstreams conforming to this edition of this document. Decoders conforming to this edition of this document shall ignore NNPFC SEI messages with nnpfc_purpose in the range of 64 to 65 535, inclusive.

**Table 20** - **Definition of nnpfc_purpose**

| bitMask | Interpretation |
|---|---|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |
| 0x40 | Temporal extrapolation (i.e., generating one or more future pictures) |

The variables ChromaUpsamplingFlag, ResolutionResamplingFlag, PictureRateUpsamplingFlag, BitDepthUpsamplingFlag, ColourizationFlag, and TemporalExtrapolationFlag, specifying whether nnpfc_purpose indicates the purpose of the NNPF to include chroma upsampling, resolution resampling, picture rate upsampling, bit depth upsampling, colourization, and temporal extrapolation, respectively, are derived as follows:

$$ChromaUpsamplingFlag = ( ( nnpfc\_purpose \ \& \ 0x02 ) > 0 ) \ ? \ 1 : 0$$

$$ResolutionResamplingFlag = ( ( nnpfc\_purpose \ \& \ 0x04 ) > 0 ) \ ? \ 1 : 0$$

$$PictureRateUpsamplingFlag = ( ( nnpfc\_purpose \ \& \ 0x08 ) > 0 ) \ ? \ 1 : 0 \qquad (75)$$

$$BitDepthUpsamplingFlag = ( ( nnpfc\_purpose \ \& \ 0x10 ) > 0 ) \ ? \ 1 : 0$$

$$ColourizationFlag = ( ( nnpfc\_purpose \ \& \ 0x20 ) > 0 ) \ ? \ 1 : 0$$

$$TemporalExtrapolationFlag = ( ( nnpfc\_purpose \ \& \ 0x40 ) > 0 ) \ ? \ 1 : 0$$

NOTE 2 - When a reserved value of nnpfc_purpose is taken into use in the future by ITU-T | ISO/IEC, the syntax of this SEI message could be extended with syntax elements whose presence is conditioned by nnpfc_purpose being equal to that value or any one of a set of values including that value.

**Update mechanism in current NNPFC SEI specification**

In the NNPF characteristics SEI of the first prior art approach, the concept of sending a base NNPF in an NNPFC SEI and of updating it in another NNPFC SEI is specified. An NNPF with a given identifier Id specified in **nnpfc_id**, may be signaled as a base model, that may be used as reference and that may also be updated by sending/receiving a new NNPFC SEI with same nnpfc_id. The syntax element **nnpfc_base_flag** is defined for indicating whether the NN model is a base model or an update relative to the base NNPF. Some basic constraints are specified on the update mechanism:

- The first NNPF, signaled in an NNPFC SEI, with a given Id appearing in the bitstream must be a base NNPF.
- All subsequent NNPFC SEIs having the same Id and being base NNPFC must have the same content as the 1st base NNPFC with this Id.

- Updates are not cumulative but rather each update is applied on the base NNPF.

Semantics of nnpfc_base_flag is provided below:

| nn_post_filter_characteristics( payloadSize ) { | Descriptor |
|---|---|
| nnpfc_purpose | u(16) |
| nnpfc_id | ue(v) |
| nnpfc_base_flag | u(1) |
| ... | |

**nnpfc_base_flag** equal to 1 specifies that the SEI message specifies the base NNPF. nnpfc_base_flag equal to 0 specifies that the SEI message specifies an update relative to the base NNPF.
The following constraints apply to the value of nnpfc_base_flag:

- When an NNPFC SEI message is the first NNPFC SEI message, in decoding order, that has a particular nnpfc_id value within the current CLVS, the value of nnpfc_base_flag shall be equal to 1.
- All NNPFC SEI messages in a CLVS that have a particular nnpfc_id value and nnpfc_base_flag equal to 1 shall have identical SEI payload content.

When nnpfc_base_flag is equal to 0, the following applies:

- This SEI message defines an update relative to the preceding base NNPF in decoding order with the same nnpfc_id value. Updates are not cumulative but rather each update is applied on the base NNPF, which is the NNPF specified by the first NNPFC SEI message, in decoding order, that has a particular nnpfc_id value within the current CLVS. The NNPF defined by this SEI message is obtained by applying the update defined by this SEI message relative to the base NNPF with the same nnpfc_id value.
- This SEI message pertains to the current decoded picture and all subsequent decoded pictures of the current layer, in output order, until the end of the current CLVS or up to but excluding the decoded picture that follows the current decoded picture in output order within the current CLVS and is associated with a subsequent NNPFC SEI message, in decoding order, having nnpfc_base_flag equal to 0 and that particular nnpfc_id value within the current CLVS, whichever is earlier.

**Neural-network post-filter activation SEI message (NNPFA) SEI**

In addition to the NNPFC SEI message, a Neural-network post-filter activation SEI message (NNPFA) is further specified in the first prior art approach. NNPFA SEI is used to activate or de-activate the possible use of a neural-network post-processing filter (NNPF), identified by syntax elements **nnpfa_target_id** and **nnpfa_target_base_flag**, for post-processing filtering of a set of pictures. If nnpfa_target_base_flag is equal to 1, the target NNPF is the base NNPF with nnpfc_id equal to nnpfa_target_id. Otherwise, the target NNPF is the NNPF specified by the last NNPFC SEI message with nnpfc_id equal to nnpfa_target_id, that is a base NNPF.
It is noted that there may be several NNPFA SEI messages present for the same picture, for example, when the NNPFs are meant for different purposes or for filtering of different colour components.
Syntax and excerpts of semantics of NNPFA are provided below.

| nn_post_filter_activation( payloadSize ) { | Descript or |
|---|---|
| nnpfa_target_id | ue(v) |
| nnpfa_cancel_flag | u(1) |
| if( !nnpfa_cancel_flag ) { | |
| nnpfa_persistence_flag | u(1) |
| nnpfa_target_base_flag | u(1) |
| nnpfa_no_prev_clvs_flag | u(1) |
| if( nnpfa_persistence_flag ) | |

(continued)

| | |
|---|---|
| **nnpfa_no_foll_clvs_flag** | u(1) |
| **nnpfa_num_output_entries** | ue(v) |
| for( i = 0; i < nnpfa_num_output_entries; i++ ) | |
| **nnpfa_output_flag**[ i ] | u(1) |
| } | |
| } | |

**nnpfa_target_base_flag** equal to 1 specifies that the target NNPF is the base NNPF with nnpfc_id equal to nnpfa_target_id. nnpfa_target_base_flag equal to 0 specifies that the target NNPF is the NNPF specified by the last NNPFC SEI message with nnpfc_id equal to nnpfa_target_id that precedes the first VCL NAL unit of the current picture in decoding order and is not a repetition of the NNPFC SEI message that contains the base NNPF.

NOTE 3 - An NNPFA message can activate a base NNPF with a particular nnpfc_id value when an update of the base NNPF is active, which switches the target NNPF from the updated NNPF to the base NNPF.

When nnpfa_target_base_flag in an NNPFA SEI message is equal to 0, there shall be at least one NNPFC SEI message with nnpfc_id equal to nnpfa_target_id and nnpfc_base_flag equal to 0 that precedes the NNPFA SEI message in decoding order.

**Illustrative examples**

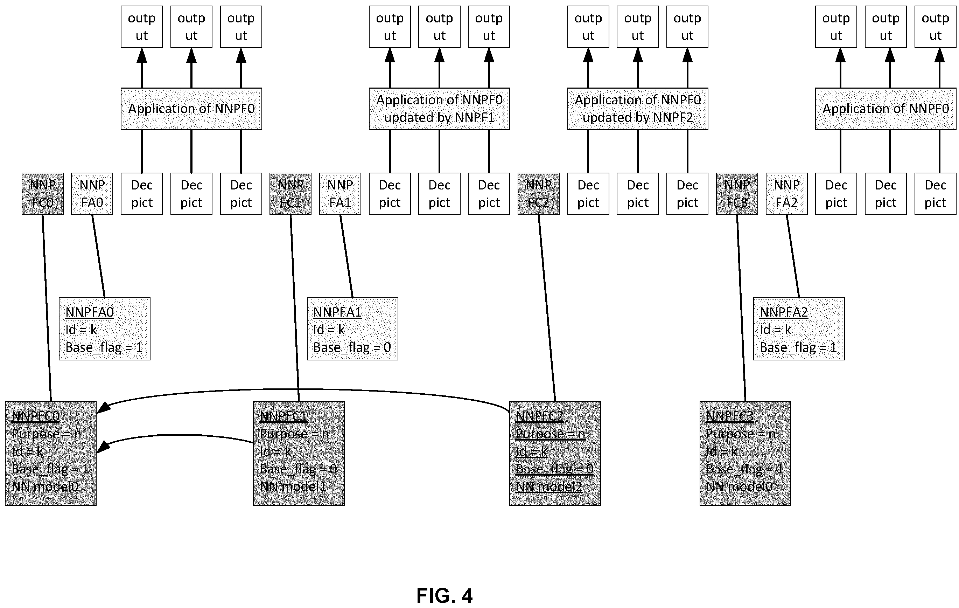

FIG. 4 illustrates an example of usage of the NNPF process. This example shows insertion in the stream of NNPFC SEIs where some are base, some are updates. It also shows insertion of NNPFA SEIs, for activating the NNPF. The NNPF version applies to decoded pictures depending on the location in the stream of the inserted NNPFC SEIs and NNPFA SEIs. The first received NNPFA (NNPFAO) activates the base NNPF (NNPFC0) for the subsequent decoded pictures. Then an update of the base NNPF (NNPFC1) is received, and this update is activated by the second received NNPFA SEI (NNPFA1) for the subsequent decoded pictures. Another update of the base NNPF (NNPFC2) is received, the update applying for the subsequent decoded pictures. Another base NNPFC is received (NNPFC3), reactivated by a new NNPFA (NNPFA2) that activates the base NNPF (NNPFO) for the subsequent decoded pictures. In this example the output of the NNPF process are post-filtered versions of the decoded pictures.

In this figure and following figures, for notation simplification, nnpfc_purpose is replaced by "Purpose", nnpfc_id is replaced by "Id", nnpfc_base_flag is replaced by "Base_flag".

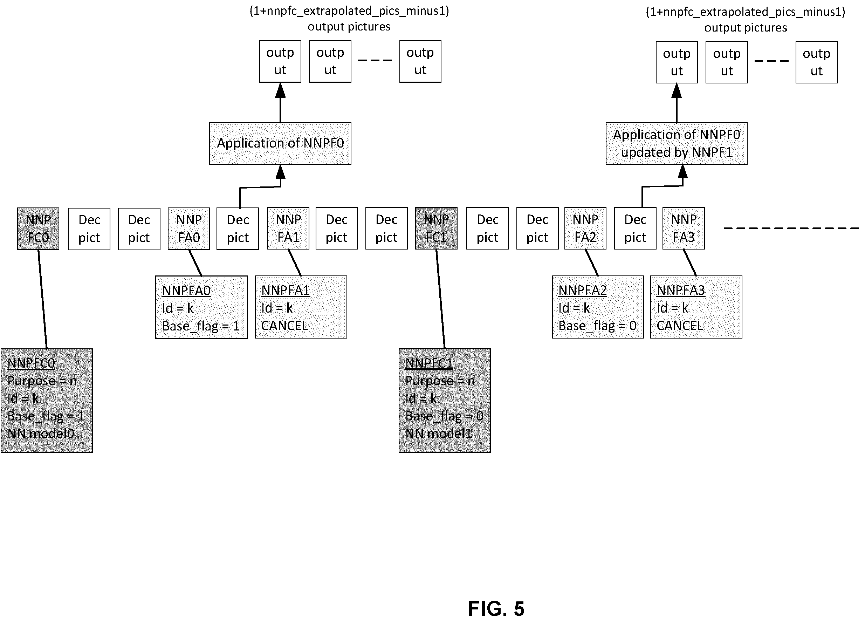

FIG. 5 illustrates another example of usage of the NNPF process for the use case of frame temporal extrapolation. In this case the output from NNPFs is made of several successive output pictures following in time the last decoded picture. Typical use cases for this video prediction feature are robotics, autonomous driving, action anticipation. For instance, for self-driving cars, the trajectory prediction in traffic of pedestrians is extremely useful to anticipate future events. Base NNPFCO is first received, and activated thanks to NNPFAO, which activates the application of NNPFO to generate (1+ nnpfc_extrapolated_pics_minus1) temporally extrapolated output pictures following the latest decoded picture. Input of the NNPFO is the last decoded picture but may also include more than one previously decoded pictures. The application of NNPFO is then cancelled for the following decoded pictures, by NNPFA1 (CANCEL flag equal to 1). Update NNPFC1 is then received, and activated by NNPFA2, which activates the application of NNPFO updated by NNPF1 to generate temporally extrapolated output pictures following the latest decoded picture. The application of NNPFO updated by NNPF1 is then cancelled for the following decoded pictures, by NNPFA2 (CANCEL flag equal to 1).

In the current design on the NNPF SEI messages, whatever the purpose of the NNPF, as indicated by the syntax element nnpfc_purpose, the post-filtering using the NN model defined in the NNPFC can only generate one instance per picture. The NNPF can generate several pictures from the decoded picture at different time stamps, or picture numbers or picture order counts (POCs), for instance in case of interpolation from 2 surrounding non-successive decoded pictures, or in case of extrapolation from previous decoded pictures. But for a given time stamp, or picture number, or POC, one single processed picture can be generated from the application of the NNPF. For instance, when purpose is frame interpolation, only one instance per output interpolated frame is generated; when purpose is frame extrapolation, only one instance per output extrapolated frame is generated. A signaling that would allow generating multiple instances of a same output frame is therefore desirable. Such signaling would be particularly advantageous for the use case of frame temporal extrapolation as described herein. Nevertheless, the present principles would also be advantageous and easily implemented to address other purposes such as frame interpolation, frame upsampling, frame filtering.

Accordingly, the present document proposes to allow for specific purposes, for example temporal extrapolation, generating more than one instances of output pictures for a same time stamp, or picture number, or POC, either from the application of several different NNPF models, or from the application of one NNPF model configured with different inputs (or control parameters sets). The present document proposes to signal several NN models (including one NN model with configurable inputs), with targeting purpose of temporal extrapolation; to activate the several NN models by several associated NNPF activation SEIs inserted before the decoded picture from which the several instances of temporal extrapolations will be performed using the several NN models; and optionally, depending on the considered variant, to signal in the bitstream an information (one or more syntax elements) indicating that for the temporal extrapolation purpose, several instances of a same temporally extrapolated picture may be generated by the NNPF process.

In a main variant, at least one of the signaled NN models serves as reference for the other NN models, the signaling for the other NN models corresponding to an update of the reference NN model. In another variant, the signaled NN models are reference NN models, thus signaled independently (ie not as an update of a previously signaled model).

In a first embodiment, it is proposed to signal more than one NNPFC SEIs with the same temporal extrapolation purpose and with the same nnpfc_id, where some of those NNPFC SEIs may generate different instances (versions) of a same output temporally extrapolated picture, and where a syntax element is added to indicate the id of the instance associated with the NNPFC SEI.

In a second embodiment, it is proposed to signal more than one (N) NNPFC SEIs with the same temporal extrapolation purpose and with different nnpfc_id, to activate the N NNPFC SEIs by N NNPFA SEIs, each one referring to one of the N NNPFC SEIs, and to enable the non-cascaded application of N temporal extrapolation NNPF processes to the same decoded pictures to generate multiple instances of each temporally extrapolated picture, using the N NNPFs.

In a third embodiment it is proposed to signal different NN models in a same NNPFC SEI, each model targeting one instance of each extrapolated picture. An information related to the number of instances is signaled in the SEI.

In a fourth embodiment, it is proposed to signal a NN model further using as input control parameters set, each control parameters set targeting one instance of each extrapolated picture. The control parameter set may be signaled or derived from video data characteristics.

Although various embodiments for the signaling are proposed, the various embodiments share the concept of signaling several NN models (wherein one NN model with configurable inputs may be seen as several configured NN models) with targeting purpose of temporal extrapolation generating more than one instances of output pictures for a same time stamp, or picture number, or POC.

Various embodiments of the syntax structure are described in the following that may be used in combination or independently.

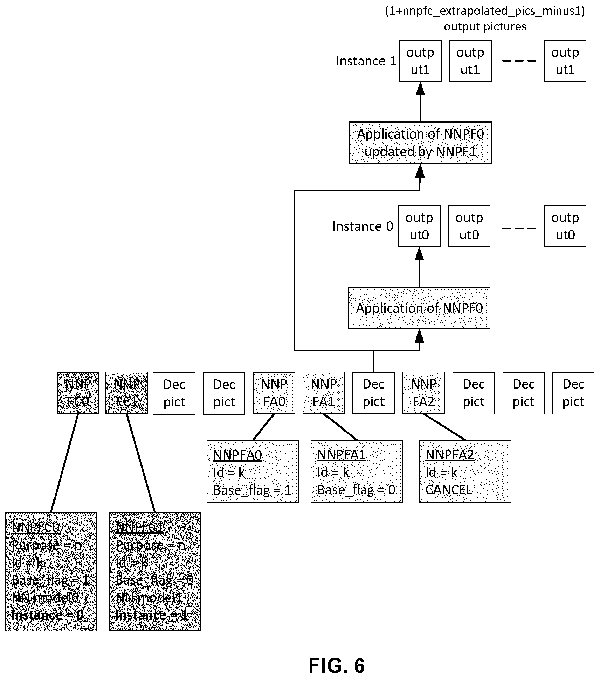

FIG. 6 illustrates an example of usage of the NNPF process according a first embodiment. According to the first embodiment, more than one NNPFC SEIs are signaled with the same nnpfc_id, where some of those NNPFC SEIs may generate different instances (versions) of a same output temporally extrapolated picture. Additionally, a new syntax element is signaled when nnpfc_purpose is temporal extrapolation, to indicate the identifier Id of the output temporally extrapolated picture instance (noted nnpfc_extrapolated_pics_id).

Additionally, a syntax element may be added to indicate the maximum number of instances (noted nnpfc_extrapolated_pics_max_id). In the syntax below, this new syntax elements are added in the NNPFC SEI (highlighted in underlined, bold, italic). Alternatively, those parameters could be signaled into another SEI attached to the NNPFC SEI, for instance in a NNPFA SEI with nnpfa_target_id equal to nnpfc_id of the NNPFC SEI.

| nn_post_filter_characteristics( payloadSize ) { | **Descriptor** |
|---|---|
| ... | |
| if( PictureRateUpsamplingFlag ) | |
| for( i = 0; i < nnpfc_num_input_pics_minus1; i++ ) | |
| **nnpfc_interpolated_pics**[ i ] | ue(v) |
| if( TemporalExtrapolationFlag ) \| | |
| nnpfc_extrapolated_pics_minus1 | ue(v) |
| ***nnpfc_extrapolated_pics_max_id*** | ***ue(v)*** |
| ***nnpfc_extrapolated_pics_id*** | ***ue(v)*** |
| } | |
| ... | |

Semantics is described below.

**nnpfc_extrapolated_pics_max_id** indicates the maximum possible value of nnpfc_extrapolated_pics_id.

**nnpfc extrapolated_pics_id** indicates the id of the instance of each extrapolated pictures. nnpfc_extrapolated_pics_id shall be in the range of 0 to nnpfc_extrapolated_pics_max_id.

It is required that all the active NNPFC SEIs with the same nnpfc_id are consistent, meaning that various common parameters are constrained to have the same value, such as nnpfc_extrapolated_pics_minus1 or nnpfc_extrapolated_pics_max_id.

In a variant, the NNPFC SEI(s) related to the first instance (that is with **nnpfc extrapolated_pics id = 0)** must be base NNPFC(s).

In another variant, the NNPFC SEIs not related to the first instance (that is with **nnpfc extrapolated_pics id > 0)** must be update NNPFC(s) relative to the latest base NNPFC.

As previously, for ease of notation in FIG. 6, the term "nnpfc extrapolated_pics id" is replaced by "Instance". Accordingly, a base NNPFCO **(with instance=0)** is first received, then NNPFC1 **(with instance=1)** which is an update SEI of NNPFO is received. Then NNPFA0 is received, which activates the application of NNPFO to generate **instance 0** of the temporally extrapolated output pictures following the latest decoded picture. Then NNPFA1 is received, which activates the application of NNPFO updated by NNPF1 to generate **instance 1** of the temporally extrapolated output pictures following the latest decoded picture. NNPA2 cancels the application of temporal extrapolation for the following decoded pictures.

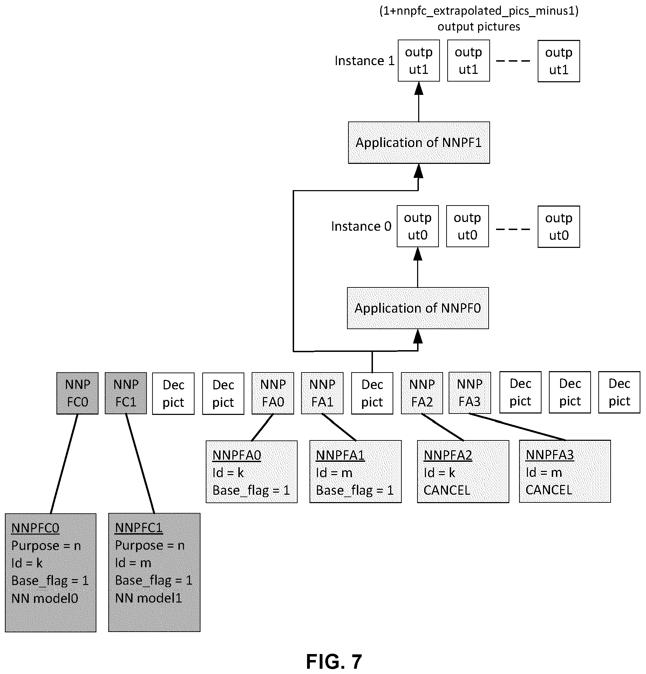

FIG. 7 illustrates an example of usage of the NNPF process according a second embodiment. According to the second embodiment, more than one (N) NNPFC SEIs are signaled with different nnpfc_id. To activate the N NNPFC SEIs by the N NNPFA SEIs, each NNPFA SEI refers to one of the N NNPFC SEIs. Advantageously, this arrangement enables the non-cascaded application of N temporal extrapolation NNPF processes to the same decoded pictures to generate multiple instances of each temporally extrapolated picture, using the N NNPFs. As shown in FIG. 7, Ids of NNPFCO and NNPFC1 are different, as well as reference Ids of NNPFA0 and NNPFA1 which is different from the embodiment of FIG. 6. The process is as follows. A base NNPFCO **(with Id=k)** is first received, then a base NNPFC1 **(with Id=m)** is received. Then NNPFA0 is received, which activates the application of NNPFO to generate a **first instance** of the temporally extrapolated output pictures following the latest decoded picture. Then NNPFA1 is received, which activates the application of NNPF1 to generate a **second instance** of the temporally extrapolated output pictures following the latest decoded picture. NNPA2 and NNPFA3 cancel the application of temporal extrapolation from NNPFCO and NNPFC1, respectively, for the following decoded pictures.

According to an additional feature, a new flag (noted below nnpfc_new_instance_flag) may be inserted in the NNPFC syntax to indicate whether a temporal extrapolation NNPFC is allowed to generate a new instance of each temporally extrapolated picture, independent from other simultaneous instances possibly generated from other NNPFCs. An example syntax is depicted in the table below. When nnpfc_new_instance_flag is true, the NNPF model from the NNPFC SEI can be applied to given decoded picture(s), even if another NNPF model has already been or will be applied to the same decoded picture(s). Each NNPF model having this property can generate a different instance of the output pictures. In other words, all activated NNPF models having the flag nnpfc_new_instance_flag equal to true can be applied to the same decoded pictures and can each generate their own version of extrapolated pictures.

| nn_post_filter_characteristics( payloadSize ) { | Descriptor |
| --- | --- |
| ... | |
| if( PictureRateUpsamplingFlag ) | |
| for( i = 0; i < nnpfc_num_input_pics_minus1; i++ ) | |
| **nnpfc_interpolated_pics**[ i ] | ue(v) |
| if( TemporalExtrapolationFlag ) { | |
| **nnpfc_extrapolated_pics_minus1** | ue(v) |
| _**nnpfc_new_instance_flag**_ | _**u(1)**_ |
| } | |
| ... | |

In a variant, an NNPFC SEI may be an update NNPFC referring to a base NNPFC that has a different nnpfc_id (but that has the same purpose of temporal extrapolation). When an NNPFC SEI has nnbpc_base_flag equal to 0, a new syntax element is added, nnpfc_based_id, to indicate the base NNPFC SEI used as reference. The syntax is illustrated in the table below.

| nn_post_filter_characteristics( payloadSize ) { | Descript or |
|---|---|
| ... | |
| if( PictureRateUpsamplingFlag ) | |
| for( i = 0; i < nnpfc_num_input_pics_minus1; i++ ) | |
| **nnpfc_interpolated_pics**[ i ] | ue(v) |
| if( TemporalExtrapolationFlag ) { | |
| **nnpfc_extrapolated_pics_minus1** | ue(v) |
| *if( nnpfc_base_flag == 0 )* | |
| ***nnpfc_base_id*** | ***ue(v)*** |
| *}* | |
| ... | |

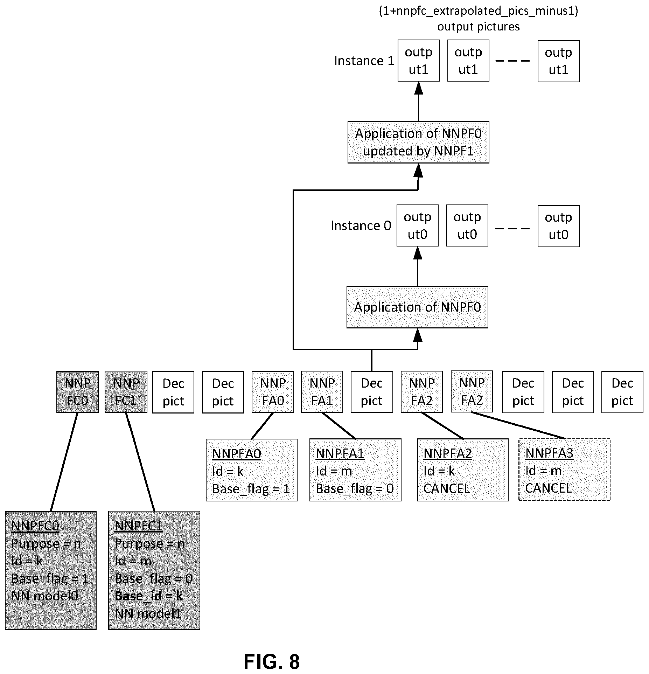

FIG. 8 illustrates an example of usage of the NNPF process according to a variant of second embodiment. The main difference with figure 7 is that a new syntax element, nnpfc_base_id (noted in the figure Base_id) is present in NNPFC1. It is equal to k, which is the Id of NNPFC0, which means that NNPFC1 is an update of NNPFCO. The process is as follows. Base NNPFCO **(with Id=k)** is first received, then NNPFC1 **(with Id=m)**, as an update of NNPFCO (referred by Base_id = k). Then NNPFA0 is received, which activates the application of NNPFO to generate a **first instance** of the temporally extrapolated output pictures following the latest decoded picture. Then NNPFA1 is received, which activates the application of NNPF1 to generate a **second instance** of the temporally extrapolated output pictures following the latest decoded picture. NNPA2 and NNPFA3 cancel the application of temporal extrapolation from NNPFCO and NNPFC1, respectively, for the following decoded pictures.

In a variant, the cancellation of a base NNPFC cancels all dependent (update) NNPFCs referring to this base NNPFC. In this case, referring to Fig. 8, NNPFA3 may be not signaled, because NNPFA2 cancels the base NNPFCO and therefore the update NNPFC1.

According to a third embodiment, different NN models are signaled in a same NNPFC SEI, each model targeting one instance of each extrapolated picture. In the example syntax table below, the maximum instance id is indicated (parameter nnpfc_extrapolated_pics_max_id gives the max id number, and therefore the number of instances is deduced as nnpfc_extrapolated_pics_max_id+1).

Then, when nnpfc_mode_idc is equal to 1, the Uniform Resource Identifier (URI) of each instance of index i (i in [1, nnpfc_extrapolated_pics max_id]) is signaled **(nnpfc_uri_instance[ i ]**), in addition to the URI of the instance 0 indicated in the existing syntax element nnpfc_uri. Another syntax element **nnpfc_tag_uri_instance[ i ]** can also be signaled, but in a preferred implementation this information is inferred from nnpfc_tag_uri.

When nnpfc_mode_idc is equal to 0, the payload bytes of each instance of index j (j in [1, nnpfc_extrapolated_pics_max_id]) are signaled (**nnpfc_payload_byte[ j ][ i ]**), in addition to the payload bytes of the instance 0 indicated in the existing syntax elements nnpfc_payload_byte[ i ].

| nn_post_filter_characteristics( payloadSize ) { | Descriptor |
|---|---|
| **nnpfc_purpose** | u(16) |
| **nnpfc_id** | ue(v) |
| **nnpfc_base_flag** | u(1) |
| **nnpfc_mode_idc** | ue(v) |
| if( nnpfc_mode_idc = = 1 ) { | |
| while( !byte_aligned( ) ) | |
| **nnpfc_alignment_zero_bit_a** | u(1) |
| **nnpfc_tag_uri** | st(v) |
| **nnpfc_uri** | st(v) |

(continued)

| | |
|---|---|
| } | |
| ... | |
| if( TemporalExtrapolationFlag ) { | |
| **nnpfc_extrapolated_pics_minus1** | ue(v) |
| *nnpfc extrapolated pics max id* | *ue(v)* |
| *if( nnpfc_mode_idc == 1 ) {* | |
| *for( i = 1; i <= nnpfc_extrapolated_pics_max_id; i++ ) {* | |
| *nnpfc_tag_uri_instance[ i ]* | *st(v)* |
| *nnpfc_uri_instance[ i ]* | *st(v)* |
| *}* | |
| *}* | |
| *}* | |
| ... | |
| /* ISO/IEC 15938-17 bitstream */ | |
| if( nnpfc_mode_idc == 0 ) { | |
| while( !byte_aligned( ) ) | |
| **nnpfc_alignment_zero_bit_b** | u(1) |
| for( i = 0; more_data_in_payload( ); i++ ) | |
| **nnpfc_payload_byte**[ i ] | b(8) |
| *if( TemporalExtrapolationFlag ) {* | |
| *for( j = 1; j <= nnpfc_extrapolated_pics_max_id; i++ ) {* | |
| *for( i = 0; more_data_in_payload( ); i++ )* | |
| *nnpfc_payload_byte[ j ][ i ]* | *b(8)* |
| *}* | |
| *}* | |
| } | |
| } | |

In a variant, nnpfc_base_flag is forced to be equal to 1 when TemporalExtrapolationFlag is true.

In another variant, the NNPF instances other than the instance 0 (signaled by nnpfc_uri_instance[ i ] or nnpfc_payload_byte[ j ][ i ]) are forced to be update NNPFs of the NNPF of instance 0 (signaled by nnpfc_uri or nnpfc_payload_byte[ i ]).

According to a fourth embodiment, one NN model is signaled in a NNPFC SEI, and in addition control parameters sets are signaled, either in the NNPFC SEI or in another syntax structure (for example in an accompanying new SEI message) referring to the NNPFC SEI. Each control parameters set is used as an additional input of the NNPF and targets one instance of extrapolated picture(s). The control parameters sets may be derived by a pre-encoding analysis step or defined by default. For example, the pre-analysis step may derive parameters modeling the global motion estimated over the decoded picture (for instance, translational, affine or quadratic or homographic model parameters of objects of interest of the scene captured in the video). The control parameters sets may be derived from these estimated global motion parameters. For example, one set corresponds to keeping the estimated global motion parameters as is. Another set corresponds to modifying the estimated global motion parameters to amplify the motion of the objects of interest towards the right side of the picture. For example, in case of translational model, a control parameters set is made of 2 parameters, dx and dy, corresponding to the horizontal and vertical components of the translational motion. If the estimated motion is (dx0,dy0), a first control parameters may set may correspond to (dx0,dy0), a second one to ((1+a)*dx0,dy0), a third one to ((1-a)*dx0,dy0), where a is a slight variation parameter, for instance equal to 0.2. A fourth one may be set to (0,0). In yet other examples, a modification of dy corresponding to the vertical component of the translational motion alone or in combination with dx is described in a control parameters set. Another set corresponds to modifying the estimated global motion parameters to amplify the motion of the objects of interest towards the left side of the picture. Another set corresponds to a null global motion. Other examples of control parameters are qualitative motion indications (such as "maintain" indicating that the previous motion is maintained for next pictures, "accelerate" indicating that the previous motion is augmented for next pictures, "slow down" indicating that the previous motion is reduced for next pictures). Another example of control parameter is a quantitative value indicative of a hypothesis number (value k corresponds to hypothesis k). The NNPF model may be trained to generate different versions of extrapolated pictures depending on the hypothesis value. Other examples of control parameters set may be contemplated by the skilled in the art, thus the above examples of control parameters set are for illustrative purposes and the aspects described are not limited to these specific examples.

An example of the syntax is given in the table below, where the number of control parameters sets is indicated as nnpfc_extrapolated_pics_nb_control_params_sets, and the number of control parameters per set is indicated as nnpfc_extrapolated_pics_size_control_params. Then each control parameter control_parameter[ i ][ j ] is signaled for each set (of index i). index j indicates the index of the control parameter in the control parameters set. In a variant, the number of control parameters sets is inferred from nnpfc_extrapolated_pics_max_id (for example, it is set equal to it), and is not signaled.

| nn_post_filter_characteristics( payloadSize ) { | Descriptor |
|---|---|
|   **nnpfc_purpose** | u(16) |
|   **nnpfc_id** | ue(v) |
|   ... | |
|    if( TemporalExtrapolationFlag ) { | |
|      **nnpfc_extrapolated_pics_minus1** | ue(v) |
|      *nnpfc_extrapolated_pics_max_id* | *ue(v)* |
|      *nnpfc_extrapolated_pics_nb_control_params_sets* | *ue(v)* |
|      *nnpfc_extrapolated_pics_size_control_params_set* | *ue(v)* |
|      *for( i = 1; i <= nnpfc_extrapolated_pics_nb_control_params_sets; i++ ) {* | |
|      *for( i = 1; j <= nnpfc_extrapolated_pics_size_control_params_set; i++ ) {* | |
|        *control_parameter[ i ][j ]* | *ue(v)* |
|      *}* | |
|      *}* | |
|    } | |
|   ... | |

Alternatively, the control parameters sets may be determined at the client or decoder side by an external mean, for instance by the end-user, or the end-user machine. In this case, the control parameters sets may not need to be signaled.

In an embodiment, an NNPFA may be used to activate the NNPF and one control parameters set, to generate one instance of extrapolated picture(s) from a decoded picture using the NNPF model. If k control parameters sets are used, k NNPFAs may be signaled to activate the NNPF with those control parameters sets. The NNPFA may contain an information indicating which one(s) of the control parameters sets signaled in the NNPFC or in another syntax structure is selected and activated. This can for instance be done by adding a syntax element in the NNPFA corresponding to the index of the control parameters set to be used as input of the NNPF. In another variant, one NNPFA is signaled, activating all the control parameters sets signaled in the NNPFC or in another syntax structure linked to the NNPFC (or to the NNPF). In another variant, one NNPFA may contain an array of ids indicating which ones of the control parameters sets signaled in the NNPFC or in another syntax structure are activated.

## Decoding and post-filtering process

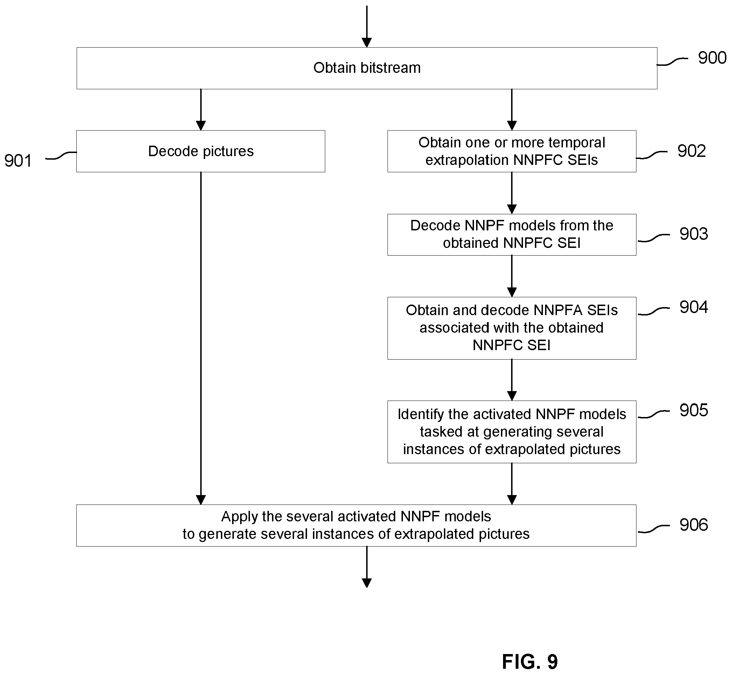

FIG. 9 illustrates a method for decoding and post-filtering a video according to an embodiment. The bitstream is obtained in step 900. The bitstream may comprise coded video data, one or more syntax structure NNPFC for temporal extrapolation neural-network post-filter according to any of the previous illustrative examples. Besides, the bitstream comprises one or more syntax structure for neural-network post-filter activation NNPFA associated with the one or more NNPFC.

Step 901 performs the decoding of pictures to generate decoded pictures. Step 902 obtains several NNPFC SEIs with purpose corresponding to temporal extrapolation. Several NNPF models are decoded from the several NNPFC SEIs in step 903. NNPFA SEIs associated to the several NNPFC SEIs are obtained and decoded in step 904. The identification of the NNPF models (or equivalently of the NNPFC SEIs) activated for generating different instances of temporally extrapolated pictures is performed on step 905. This identification may be based on the decoding of syntax elements defined above, for example:

- nnpfc_extrapolated_pics_max_id and nnpfc_extrapolated_pics_id as described with the first embodiment,
- nnbpc_base_flag, or nnpfc_base_id as described with the second embodiment,
- nnpfc_tag_uri_instance[ i ], nnpfc_uri_instance[ i ], nnpfc_payload_byte[ j ][ i ] as described with the third embodiment.

The temporal extrapolations are performed in step 906 using the several identified the NNPF models, resulting in several instances of extrapolated pictures of the latest decoded picture. Advantageously, the application of an activated NNPF model generates (1+ nnpfc_extrapolated_pics_minus1) temporally extrapolated output pictures following the latest decoded picture that has a given time stamp, or picture number, or POC. However the input of the NNPF are not limited to the last decoded picture and may include more pictures. For instance, a NNPF may also include more than one pictures decoded previously to the latest decoded picture having a given time stamp, or picture number, or POC. For example, these pictures may allow the NNPF to estimate motion information over the previously decoded picture and to generate a plurality of temporal extrapolated pictures of the latest decoded picture. For the sake of clarity, this single latest decoded picture is taken as the reference one for the particular time stamp, or picture number, or POC for extrapolation.

**Encoding and bitstream generation process**

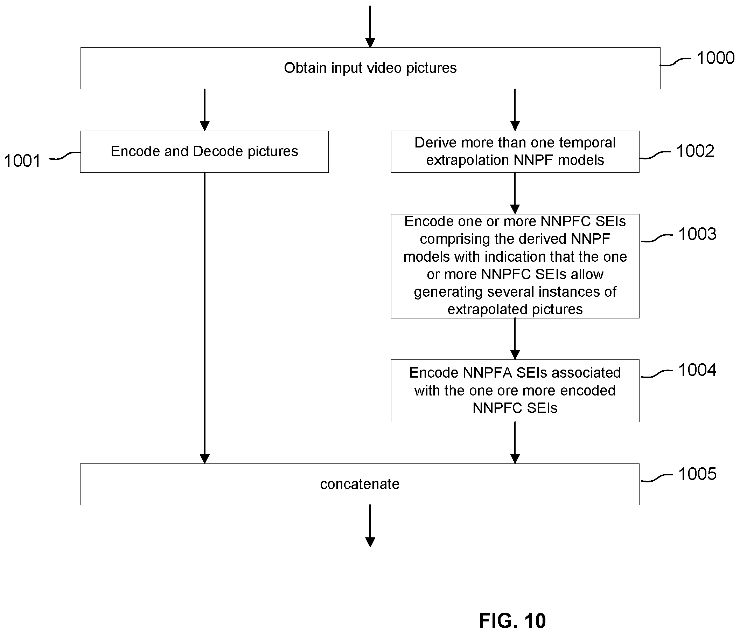

FIG. 10 illustrates a method for encoding a video and generating a bitstream according to an embodiment. The generated bitstream may comprise coded video data, one or more syntax structure NNPFC for temporal extrapolation neural-network post-filter according to any of the previous illustrative examples. Besides, the generated bitstream may comprise one or more syntax structure for neural-network post-filter activation NNPFA associated with the one or more NNPFC. The input of the encoding method is the input video, obtained in step 1000. Step 1001 performs the encoding and decoding (i.e.. reconstructing of pictures). Step 1002 derives several temporal extrapolation NNPF models with the purpose of generating more than one instances of extrapolated pictures of a decoded picture of the video by using the plurality of NNPF models. Related one or more NNPFC SEIs associated to the plurality of NNPF models are encoded, with insertion of information in these one or more NNPFC SEIs to allow generation of multiple instances of the extrapolated pictures in step 1003 according to any of the previously described illustrative examples. This information may use the syntax elements defined above, for example:

- nnpfc_extrapolated_pics_max_id and nnpfc_extrapolated_pics_id as described with the first embodiment,
- nnbpc_base_flag, or nnpfc_base_id as described with the second embodiment,
- nnpfc_tag_uri_instance[ i ], nnpfc_uri_instance[ i ], nnpfc_payload_byte[ j ][ i ] as described with the third embodiment.

The NNPFA SEIs signaled to activate the NNPFC SEIs are also encoded prior to the decoded picture to which the temporal extrapolation should apply (step 1004). Data are then concatenated to generate the output bitstream (step 1005).

**Other illustrative example of decoding and post-filtering process**

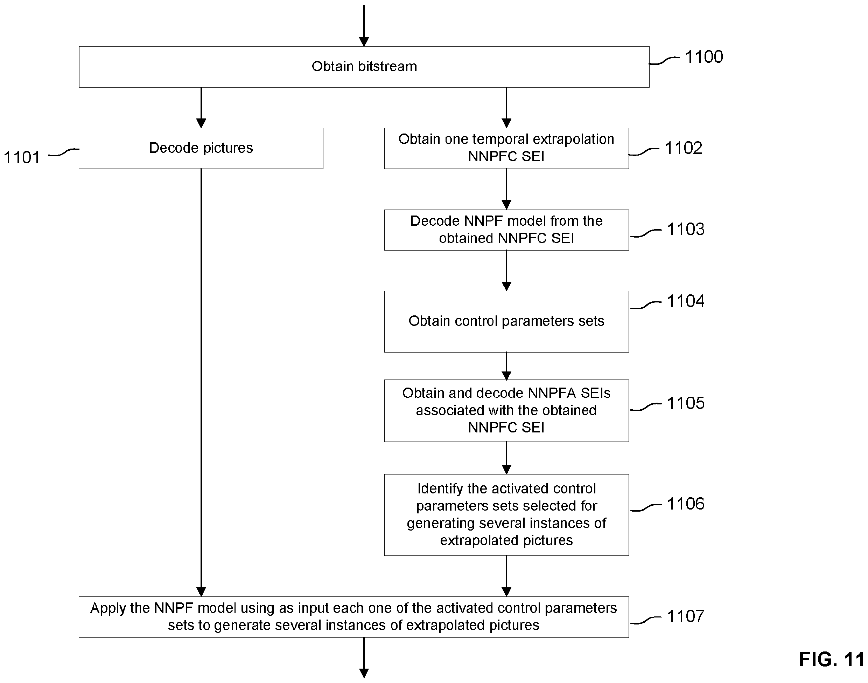

FIG. 11 illustrates a method for decoding and post-filtering a video according to another embodiment. For example, the embodiment of Fig.11 is adapted to the fourth embodiment of the proposed signaling with control parameters. The bitstream is obtained in step 1100. The bitstream may comprise coded video data, one or more syntax structure NNPFC for temporal extrapolation neural-network post-filter according to any examples. For instance, the skilled in the art will appreciate, that the first variant embodiment where different NN models may be signaled to generate multiple instances is compatible with the fourth variant embodiment as one NN model of the first variant embodiment may further use different control parameters as with the fourth variant embodiment. Besides, the bitstream comprises one or more syntax structure for neural-network post-filter activation NNPFA associated with the one or more NNPFC and control parameters sets. Step 1101 performs the decoding of pictures to generate decoded pictures. Step 1102 obtains one NNPFC SEI with purpose corresponding to temporal extrapolation. One NNPF model is decoded from the NNPFC SEI in step 1103. Control parameter sets are obtained, in step 1104, from a syntax structure of the bitstream or from external means. One or more NNPFA SEIs associated to the NNPFC SEI and the related control parameters sets are obtained and decoded in step 1105. The identification of the Control parameter sets activated for generating different instances of temporally extrapolated pictures is performed on step 1106. This identification may be based on the decoding of syntax elements defined above, for example nnpfc_extrapolated_pics_nb_control_params_sets, nnpfc_extrapolated_pics_size_control_params and control_parameter[ i ][ j ]. Additional syntax elements, for instance inserted in the NNPFA SEIs, may also be signaled to indicate which of the Control parameter sets are activated. For instance, one NNPFA SEI, or another syntax structure, may contain an array of id values indicating the ids of the activated Control parameter sets among the Control parameter sets obtained in step 1104.

The temporal extrapolations are performed in step 1107 using the several activated Control parameter sets used as input of the NNPF model, resulting in several instances of extrapolated pictures. As mentioned above, the NNPF model may also use more than one previously decoded pictures as input.

**Encoding and bitstream generation process**

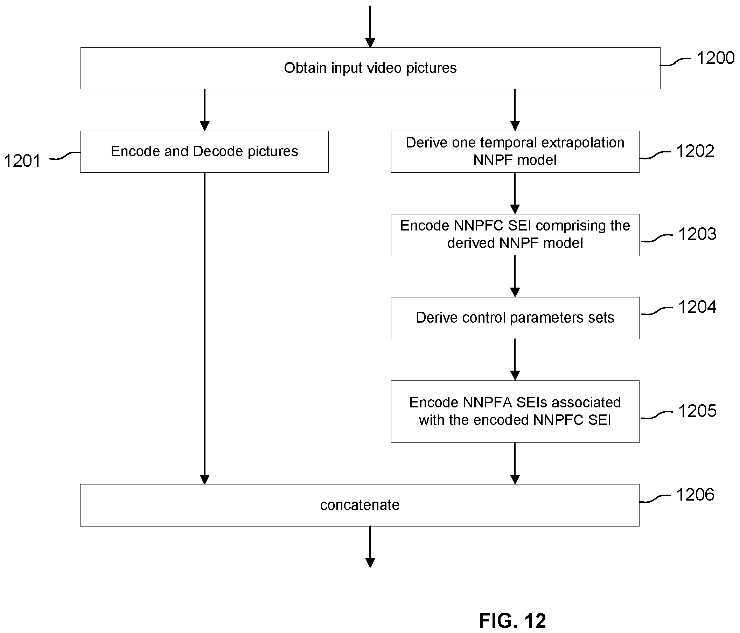

FIG. 12 illustrates a method for encoding a video and generating a bitstream according to an embodiment. The generated bitstream may comprise coded video data, one or more syntax structure NNPFC for temporal extrapolation neural-network post-filter according to any of the previous illustrative examples. Besides, the generated bitstream may comprise one or more syntax structure for neural-network post-filter activation NNPFA associated with the one or more NNPFC. The input of the encoding method is the input video, obtained in step 1200. Step 1201 performs the encoding and decoding (i.e.. reconstructing of pictures). Step 1202 derives one temporal extrapolation NNPF model with the purpose of generating more than one instances of extrapolated pictures of a decoded picture of the video by using a plurality of control parameters sets. Related NNPFC SEI associated to the NNPF model is encoded in step 1203. Control parameters sets enabling generating from the NNPF model multiple instances of extrapolated pictures for a decoded pictures are derived and an information related to the derived Control parameters sets may be encoded in step 1204, according to any of the previously described illustrative examples. This information may use the syntax elements defined above, for example nnpfc_extrapolated_pics_nb_control_params_sets, nnpfc_extrapolated_pics_size_control_params and control_parameter[ i ][ j ].

The NNPFA SEIs signaled to activate the NNPFC SEIs are also encoded prior to the decoded picture to which the temporal extrapolation should apply (step 1205). Data are then concatenated to generate the output bitstream (step 1206).

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various methods and other aspects described in this application can be used to modify modules, for example, the motion compensation module (270) of a video encoder 200 as shown in FIG. 2. Moreover, the present aspects are not limited to ECM and VVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

Note that the syntax elements as used herein are descriptive terms. As such, they do not preclude the use of other syntax element names.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:

**Claims**

1. A method comprising:

   decoding (901) at least one picture of a video;
   obtaining (902) more than more than one syntax structure for temporal extrapolation neural-network post-filter NNPFC;
   decoding (903) a plurality of neural-network post-filter NNPF models from the more than one NNPFC;
   obtaining (904) more than one syntax structure for neural-network post-filter activation NNPFA associated with the more than one NNPFC;
   identifying (905) a plurality of activated NNPF models; and
   generating (906) more than one instances of extrapolated pictures of a decoded picture of the video by applying the plurality of activated NNPF models.

2. A method comprising:
   encoding and decoding (1001) at least one picture of a video;

   deriving (1002) a plurality of neural-network post-filter NNPF models for temporal extrapolation such that more than one instances of extrapolated pictures of a decoded picture of the video are generated by applying the plurality of NNPF models;
   encoding (1003) more than more than one syntax structure for temporal extrapolation neural-network post-filter NNPFC associated with the plurality of NNPF models; and
   encoding (1004) more than one syntax structure for neural-network post-filter activation NNPFA associated with the more than one NNPFC.

3. The method of any of claims 1 or 2 wherein a syntax structure for temporal extrapolation neural-network post-filter NNPFC comprises:

   an indication of a purpose associated to temporal extrapolation;
   a neural-network post-filter model identifier;
   an indication of one of a base model or an update of a base model for neural-network post-filter; and
   an indication of an instance.

4. The method of claim 3, wherein the indication of one of a base model or an update of a base model for neural-network post-filter indicates a base model for a first instance of a neural-network post-filter model and the indication of one of a base model or an update of a base model for neural-network post-filter indicates an update model for a second instance of a neural-network post-filter model.

5. The method of claim 3, wherein obtaining (904) more than one syntax structure for neural-network post-filter activation NNPFA associated with the more than one NNPFC comprises:

   obtaining (904) a first syntax structure for neural-network post-filter activation NNPFA associated with a first instance of a neural-network post-filter model identifier; and
   obtaining (904) a second syntax structure for neural-network post-filter activation NNPFA associated with a second instance of a same neural-network post-filter model identifier.

6. The method of any of claims 1 or 2, wherein obtaining (902) more than more than one syntax structure for temporal extrapolation neural-network post-filter NNPFC comprises:

   obtaining a first syntax structure for temporal extrapolation neural-network post-filter NNPFC comprising:

   an indication of a purpose associated to temporal extrapolation,
   a first neural-network post-filter model identifier,
   a first indication of one of a base model or an update of a base model for neural-network post-filter; and

   obtaining a second syntax structure for temporal extrapolation neural-network post-filter NNPFC comprising:

   an indication of a purpose associated to temporal extrapolation,

21

a second neural-network post-filter model identifier distinct from the first neural-network post-filter model identifier,
a second indication of one of a base model or an update of a base model for neural-network post-filter.

7. The method of claim 6, wherein obtaining (904) more than one syntax structure for neural-network post-filter activation NNPFA associated with the more than one NNPFC comprises:

obtaining a first syntax structure for neural-network post-filter activation NNPFA associated with the first neural-network post-filter model identifier; and
obtaining a second syntax structure for neural-network post-filter activation NNPFA associated with the second neural-network post-filter model identifier.

8. The method of any of claims 6 or 7, wherein the first indication of one of a base model or an update of a base model for neural-network post-filter indicates a base model for the first neural-network post-filter model identifier and the second indication of one of a base model or an update of a base model for neural-network post-filter indicates a base model for the second neural-network post-filter model identifier.

9. The method of any of claims 6 or 7, wherein the first indication of one of a base model or an update of a base model for neural-network post-filter indicates a base model for the first neural-network post-filter model identifier, the second indication of one of a base model or an update of a base model for neural-network post-filter indicates an update model for the second neural-network post-filter model identifier, and wherein the second syntax structure for temporal extrapolation neural-network post-filter NNPFC further comprises an indication of the first neural-network post-filter model identifier as being the updated model.

10. The method of any of claims 1 to 9, wherein the more than more than one syntax structure for temporal extrapolation neural-network post-filter NNPFC and the more than one syntax structure for neural-network post-filter activation NNPFA associated with the more than one NNPFC are obtained from or encoded into Supplemental Enhancement information SEI messages.

11. A method comprising:

decoding (901) at least one picture of a video;
obtaining (902) a syntax structure for temporal extrapolation neural-network post-filter NNPFC, the syntax structure for temporal extrapolation neural-network post-filter NNPFC comprising :

an indication of a purpose associated to temporal extrapolation.
a model identifier of a first instance;
an indication of one of a base model or an update of a base model for the first instance;
an indication of a number larger than one of instances of the neural-network post-filter, and
for each instance distinct from the first instance, an indication a of neural-network post-filter NNPF model;
decoding (903) the plurality of NNPF models from the NNPFC;
obtaining (904) more than one syntax structure for neural-network post-filter activation NNPFA associated with the NNPFC;
identifying (905) a plurality of activated NNPF models; and

generating more than one instances of extrapolated pictures of a decoded picture of the video by applying the plurality of activated NNPF models to the decoded picture.

12. A method comprising:

encoding and decoding (1001) at least one picture of a video;
deriving (1002) a plurality of neural-network post-filter NNPF models for temporal extrapolation such that more than one instances of extrapolated pictures of a decoded picture of the video are generated by applying the plurality of NNPF models to the decoded picture;
encoding (1003) a syntax structure for temporal extrapolation neural-network post-filter NNPFC, the syntax structure for temporal extrapolation neural-network post-filter NNPFC comprising :

an indication of a purpose associated to temporal extrapolation,

a model identifier of a first instance,

an indication of one of a base model or an update of a base model for the first instance,

an indication of a number larger than one of instances of the neural-network post-filter, and

for each instance distinct from the first instance, an indication a of neural-network post-filter NNPF model; and

encoding (1004) more than one syntax structure for neural-network post-filter activation NNPFA associated with the NNPFC.

13. A method comprising:

decoding (1101) at least one picture of a video;

obtaining (1102) a syntax structure for temporal extrapolation neural-network post-filter NNPFC;

decoding (1103) a NNPF model from the NNPFC;

obtaining (1104) control parameters sets for the NNPF model;

obtaining (1105) more than one syntax structure for neural-network post-filter activation NNPFA associated with the NNPFC;

identifying (1106) a plurality of activated control parameter sets; and

generating (1107) more than one instances of extrapolated pictures of a decoded picture of the video by applying the NNPF model to the decoded picture, the NNPF model further using as input each one of the activated control parameters set.

14. A method comprising:

encoding and decoding (1201) at least one picture of a video;

deriving (1202) a neural-network post-filter NNPF model for temporal extrapolation such that more than one instances of extrapolated pictures of a decoded picture of the video are generated by applying the NNPF model to the decoded picture and to more than one control parameters sets;

encoding (1203) a syntax structure for temporal extrapolation neural-network post-filter NNPFC;

deriving (1204) more than one control parameters sets, an instance of extrapolated pictures of a decoded picture of the video being generated by applying the NNPF model to the decoded picture and to one of the more than one control parameters sets;

encoding (1205) more than one syntax structure for neural-network post-filter activation NNPFA associated with the NNPFC.

15. An apparatus comprising one or more processors, wherein the one or more processors are configured to implement the method according to any of claims 1 to 14.

**FIG. 1**

EP 4 625 981 A1

FIG. 2

FIG. 3

FIG. 4

EP 4 625 981 A1

(1+nnpfc_extrapolated_pics_minus1)
output pictures

| outp ut | outp ut | _ _ _ | outp ut |

(1+nnpfc_extrapolated_pics_minus1)
output pictures

| outp ut | outp ut | _ _ _ | outp ut |

Application of NNPF0

Application of NNPF0
updated by NNPF1

| NNP FC0 | Dec pict | Dec pict | NNP FA0 | Dec pict | NNP FA1 | Dec pict | Dec pict | NNP FC1 | Dec pict | Dec pict | NNP FA2 | Dec pict | NNP FA3 | _ _ _ _ _ _ _ _ _ _ _ |

NNPFA0
Id = k
Base_flag = 1

NNPFA1
Id = k
CANCEL

NNPFA2
Id = k
Base_flag = 0

NNPFA3
Id = k
CANCEL

NNPFC0
Purpose = n
Id = k
Base_flag = 1
NN model0

NNPFC1
Purpose = n
Id = k
Base_flag = 0
NN model1

**FIG. 5**

(1+nnpfc_extrapolated_pics_minus1)
output pictures

Instance 1 | outp ut1 | outp ut1 | — — — | outp ut1

Application of NNPF0
updated by NNPF1

Instance 0 | outp ut0 | outp ut0 | — — — | outp ut0

Application of NNPF0

| NNP FC0 | NNP FC1 | Dec pict | Dec pict | NNP FA0 | NNP FA1 | Dec pict | NNP FA2 | Dec pict | Dec pict | Dec pict |

NNPFA0
Id = k
Base_flag = 1

NNPFA1
Id = k
Base_flag = 0

NNPFA2
Id = k
CANCEL

NNPFC0
Purpose = n
Id = k
Base_flag = 1
NN model0
**Instance = 0**

NNPFC1
Purpose = n
Id = k
Base_flag = 0
NN model1
**Instance = 1**

**FIG. 6**

FIG. 7

FIG. 8

FIG. 9

900 Obtain bitstream

901 Decode pictures

902 Obtain one or more temporal extrapolation NNPFC SEIs

903 Decode NNPF models from the obtained NNPFC SEI

904 Obtain and decode NNPFA SEIs associated with the obtained NNPFC SEI

905 Identify the activated NNPF models tasked at generating several instances of extrapolated pictures

906 Apply the several activated NNPF models to generate several instances of extrapolated pictures

1000 — Obtain input video pictures

1001 — Encode and Decode pictures

1002 — Derive more than one temporal extrapolation NNPF models

1003 — Encode one or more NNPFC SEIs comprising the derived NNPF models with indication that the one or more NNPFC SEIs allow generating several instances of extrapolated pictures

1004 — Encode NNPFA SEIs associated with the one ore more encoded NNPFC SEIs

1005 — concatenate

FIG. 10

FIG. 11

Flow chart:

- **1100** Obtain bitstream

- **1101** Decode pictures

- **1102** Obtain one temporal extrapolation NNPFC SEI
- **1103** Decode NNPF model from the obtained NNPFC SEI
- **1104** Obtain control parameters sets
- **1105** Obtain and decode NNPFA SEIs associated with the obtained NNPFC SEI
- **1106** Identify the activated control parameters sets selected for generating several instances of extrapolated pictures
- **1107** Apply the NNPF model using as input each one of the activated control parameters sets to generate several instances of extrapolated pictures

EP 4 625 981 A1

EP 4 625 981 A1

```
                           ┌─────────────────────────────────────────────┐
                           │           Obtain input video pictures         │─── 1200
                           └─────────────────────────────────────────────┘
                                    │                          │
                                    ▼                          ▼
              ┌──────────────────────────┐      ┌──────────────────────────┐
    1201 ─────│  Encode and Decode pictures│      │ Derive one temporal extrapolation │─── 1202
              └──────────────────────────┘      │          NNPF model        │
                        │                         └──────────────────────────┘
                        │                                      │
                        │                                      ▼
                        │                         ┌──────────────────────────┐
                        │                         │ Encode NNPFC SEI comprising the │─── 1203
                        │                         │       derived NNPF model    │
                        │                         └──────────────────────────┘
                        │                                      │
                        │                                      ▼
                        │                         ┌──────────────────────────┐
                        │                         │  Derive control parameters sets │─── 1204
                        │                         └──────────────────────────┘
                        │                                      │
                        │                                      ▼
                        │                         ┌──────────────────────────┐
                        │                         │  Encode NNPFA SEIs associated  │─── 1205
                        │                         │  with the encoded NNPFC SEI   │
                        │                         └──────────────────────────┘
                        │                                      │
                        ▼                                      ▼
              ┌─────────────────────────────────────────────────────────┐
              │                        concatenate                        │─── 1206
              └─────────────────────────────────────────────────────────┘
                                         │
                                         ▼
```

**FIG. 12**

## EUROPEAN SEARCH REPORT

**Application Number**

EP 24 30 5445

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2023/196217 A1 (DOLBY LABORATORIES LICENSING CORP [US]) 12 October 2023 (2023-10-12) * paragraph [0014] - paragraph [0018]; figure 1 * * paragraph [0031] - paragraph [0032]; tables 10,11 * * paragraph [0034] - paragraph [0036] * * paragraph [0053] - paragraph [0059]; tables 21,24 * | 1-15 | INV. H04N19/117 H04N19/172 H04N19/70 |
| Y | HANNUKSELA (NOKIA) M M ET AL: "AHG9: Temporal extrapolation purpose for the neural-network post-filter characteristics SEI message", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), no. JVET-AG0089 11 January 2024 (2024-01-11), XP030313949, Retrieved from the Internet: URL:https://jvet-experts.org/doc_end_user/documents/33_Teleconference/wg11/JVET-AG0089-v1.zip JVET-AG0089-v1.docx [retrieved on 2024-01-11] * Abstract; page 1, paragraph 1 - page 2, paragraph 3.2 * | 1-15 | |

TECHNICAL FIELDS
SEARCHED      (IPC)

H04N

-/--

The present search report has been drawn up for all claims

| Place of search | Date of completion of the search | Examiner |
|---|---|---|
| Munich | 30 September 2024 | Moschetti, Fulvio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 1 of 2

**EUROPEAN SEARCH REPORT**

Application Number

EP 24 30 5445

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MCCARTHY S ET AL: "Additional SEI messages for VSEI (Draft 5)", 31. JVET MEETING; 20230711 - 20230719; GENEVA; (THE JOINT VIDEO EXPLORATION TEAM OF ISO/IEC JTC1/SC29/WG11 AND ITU-T SG.16 ), , no. JVET-AE2006 ; m64596 23 August 2023 (2023-08-23), XP030311738, Retrieved from the Internet: URL:https://jvet-experts.org/doc_end_user/documents/31_Geneva/wg11/JVET-AE2006-v2.zip JVET-AE2006-v2.docx [retrieved on 2023-08-23] * paragraph [8.28.2] - paragraph [8.28.2.2]; tables 19-20 * | 1-15 | |
| Y | Sean McCarthy ET AL: "Improvements under consideration for neural network post filter SEI messages", 29. JVET MEETING by teleconference, 11-20 January 2023; (THE JOINT VIDEO EXPLORATION TEAM OF ISO/IEC JTC1/SC29/WG11 AND ITU-T SG.16 ) , no. JVET-AD0088 ; m62717 11 January 2023 (2023-01-11), XP030308707, Retrieved from the Internet: URL:https://jvet-experts.org/doc_end_user/documents/30_Antalya/wg11/JVET-AD0088-v3.zip JVET-AD0088-v3_SpecText.docx [retrieved on 2023-04-25] * paragraph [8.28.2.2]; tables 20,21 * | 1-15 | TECHNICAL FIELDS SEARCHED (IPC) |

The present search report has been drawn up for all claims

| Place of search | Date of completion of the search | Examiner |
|---|---|---|
| Munich | 30 September 2024 | Moschetti, Fulvio |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 24 30 5445

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2024

| Patent document cited in search report | Publication date | Patent family member(s) | Publication date |
|---|---|---|---|
| WO 2023196217 A1 | 12-10-2023 | NONE | |